# FASCICULE DE BREVET EUROPEEN

(11) **EP 2 173 602 B1**
(45) Date de publication et mention de la délivrance du brevet: **01.10.2014**
(21) Numéro de dépôt: 08827866.8
(22) Date de dépôt: 29.07.2008
(51) Int. Cl.: B62D 25/08, B62D 21/15, B62D 29/00, B60Q 1/04, B60R 21/34

(54) **FACE AVANT DE VÉHICULE AUTOMOBILE AVEC TRAVERSE AU NIVEAU DES LONGERONS PRINCIPAUX**
VORDERFLÄCHE EINES AUTOMOBILS MIT QUERSTANGE AN DEN HAUPTSCHIENEN
FRONT FACE OF AUTOMOBILE WITH CROSSBAR AT THE MAIN RAILS

(30) Priorité: 03.08.2007 FR 0756932
(43) Date de publication de la demande: 14.04.2010
(73) Titulaire: Faurecia Bloc Avant, 92000 Nanterre (FR)
(72) Inventeur: RIVIERE, Caroline, F-15320 Faverolles (FR); BIERJON, Didier, F-25400 Audincourt (FR)
(74) Mandataire: Domenego, Bertrand
(86) Numéro de dépôt international: PCT/FR2008/051420
(87) Numéro de publication internationale: WO 2009/024708

(56) Documents cités:
- EP-A- 1 433 663
- EP-A- 1 754 650
- WO-A-2007/028908
- DE-A1- 19 961 754
- DE-A1-102004 057 678
- FR-A- 2 783 796
- FR-A- 2 888 197
- JP-A- 2002 160 668

## Description

La présente invention concerne en général les faces avant de véhicule automobile.

Plus précisément, l'invention concerne une face avant de véhicule automobile, selon le préambule de la revendication 1.

Une telle face avant est connue de FR-A-2 888 197.

Les faces avant doivent respecter un nombre croissant de contraintes, provenant de la réglementation ou imposées par les constructeurs de véhicules automobiles. Ainsi, elles doivent incorporer des absorbeurs de chocs de différents types (chocs compatibilité moyenne vitesse, chocs réparabilité faible vitesse, chocs piétons du type tête, hanches, jambes), permettre un accès facile au boîtier des projecteurs en vue de changer les lampes, présenter un encombrement minimal, notamment en Z, garantir des jeux et affleurements, notamment vis-à-vis des ailes et du capot du véhicule, permettre une adaptation facile de la face avant aux différents véhicules faisant partie d'une même plateforme constructeur.

On connaît des faces avant permettant de répondre à une partie de ces exigences. Ainsi, FR-A-2 890 621 décrit une face avant dont la traverse supérieure est légèrement abaissée de manière à loger un absorbeur prévu pour amortir un choc piéton de type hanche. Toutefois, cette face avant ne permet pas de respecter l'ensemble des exigences détaillées ci-dessus.

FR-A-2 783 796, DE 199 61754, DE 10 2004 057678, EP-A-1 754 650 et WO-2007/028908 décrivent chacun une face avant de véhicule automobile ayant une traverse transversale.

Dans ce contexte, l'invention vise à proposer une face avant présentant une architecture en rupture par rapport à l'état de la technique, et permettant de respecter l'ensemble des critères indiqués plus haut.

A cette fin, l'invention porte sur une face avant selon la revendication 1.

La traverse peut également présenter une ou plusieurs des caractéristiques ci-dessous, considérées individuellement ou selon toutes les combinaisons techniquement possibles :
- la face avant comprend au moins deux projecteurs, la traverse étant située verticalement à un niveau inférieur à celui des projecteurs ;
- la face avant comprend au moins deux absorbeurs adaptés pour amortir les chocs dits "moyenne vitesse", ces absorbeurs de chocs "moyenne vitesse" étant interposés entre des parties d'extrémités opposées de la traverse et les extrémités avant des longerons principaux ;
- les absorbeurs de chocs "moyenne vitesse" comprennent un bloc en matériau alvéolaire et une enveloppe dans laquelle est engagé le bloc en matériau alvéolaire, les enveloppes étant constituées par les parties d'extrémité de la traverse ;
- la traverse est une pièce en matière plastique venue de moulage ;
- la face avant comprend une poutre rigide métallique transversale, ladite poutre présentant des extrémités transversales interposées entre les absorbeurs de chocs "moyenne vitesse" et les extrémités avant des longerons principaux ;
- la traverse est une pièce hybride comprenant un insert métallique rigide et une matière plastique surmoulée sur l'insert métallique ;
- la face avant comprend deux boîtiers de projecteurs et deux bras de support des boîtiers de projecteurs, lesdits bras de support étant solidaires de la traverse ;
- les bras de support sont venus de moulage avec la traverse ;
- les bras de support sont rapportés sur la traverse ;
- la face avant comprend des moyens de fixation des bras de support à des longerons supérieurs du véhicule ;
- les boîtiers de projecteurs sont rigidement fixés aux bras de support par des zones inférieures, la face avant comportant des moyens de fixation dé zones supérieures des boîtiers de projecteurs aux ailes du véhicule ;
- la face avant comprend un absorbeur adapté pour amortir les chocs piétons de type jambes rigidement fixé le long d'une face frontale de la traverse ;
- les moyens pour fixer rigidement la demi-cassette supérieure à la traverse sont adaptés pour être frangibles en cas de chocs piéton de type hanche à l'avant du véhicule ;
- la face avant comprend des moyens pour bloquer rigidement la radiateur par rapport à la demi-cassette inférieure adaptés pour permettre un basculement du radiateur avec la demi-cassette supérieure en cas de chocs piéton de type hanche à l'avant du véhicule ;
- la face avant comprend un absorbeur voie basse adapté pour amortir les chocs piétons de type jambe, rigidement fixé à la demi-cassette inférieure, à distance au-dessous de la traverse ; et
- la ou chaque serrure est disposée verticalement à distance au-dessus de la traverse et est rigidement fixée à la traverse par une entretoise rigide.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en perspective, éclatée, d'une face avant conforme à l'invention et des longerons principaux du véhicule automobile sur lesquels la face avant est destinée à être rapportée ;
- la figure 2 est une vue en perspective, à l'état assemblé, de la face avant de la figure 1 ;
- la figure 3 est une représentation schématique, vue dé côté, de la face avant de la figure 1, montrant le comportement de la demi-cassette supérieure et du radiateur en cas de chocs piéton de type hanches ; et
- la figure 4 est une vue en perspective similaire à celle de la figure 2, pour une variante de réalisation de la face avant dans laquelle la serrure est disposée à distance au-dessus de la traverse.

Dans la description qui va suivre, l'avant, l'arrière, les directions longitudinale et transversale, sont entendus relativement à la direction de déplacement normale du véhicule.

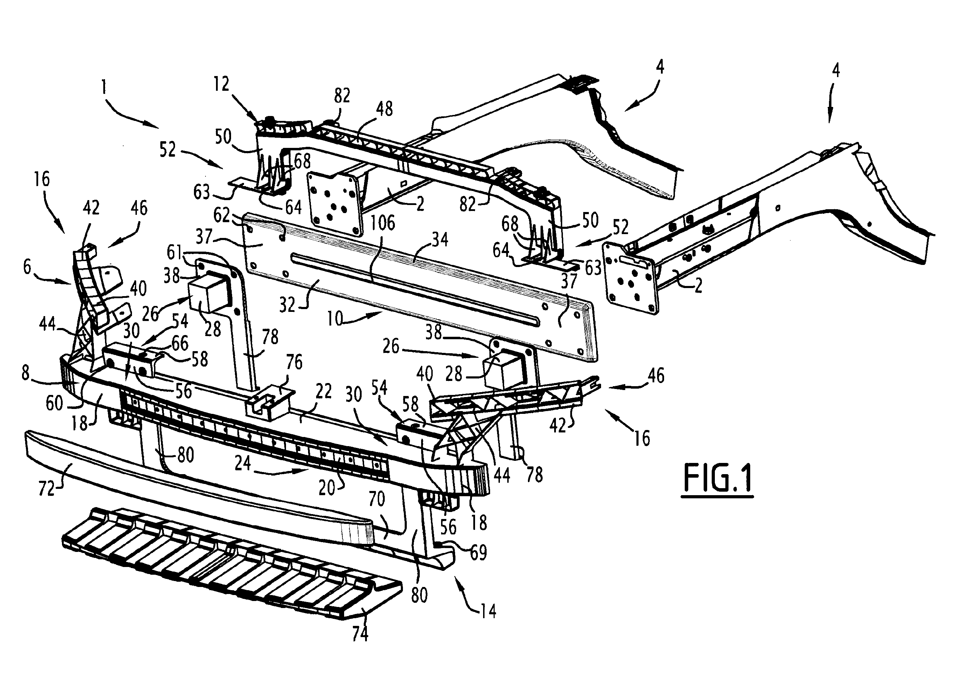

La face avant 1 représentée sur la figure 1 est un module destiné à être rapporté d'une pièce sur des extrémités avant 2 des longerons principaux 4 du véhicule automobile. Les extrémités avant des longerons principaux sont, dans un plan vertical, situés à mi-hauteur de l'avant du véhicule, celui-ci pouvant comporter en outre des longerons supérieurs (non représentés) destinés à rigidifier les ailes du véhicule et des longerons inférieurs situés en dessous des longerons principaux et destinés à supporter par exemple un absorbeur de chocs piéton.

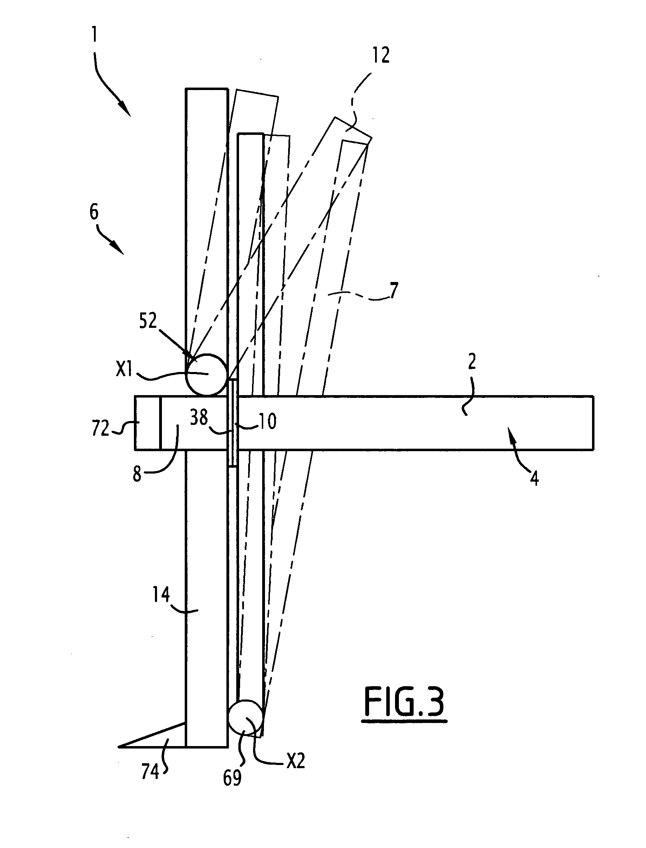

La face avant 1 comporte une structure rigide de support 6, et une pluralité d'équipements rigidement fixés sur cette structure. Parmi ces équipements figurent notamment le radiateur 7 du circuit de refroidissement du moteur (voir figure 3), un groupe moto-ventilateur apte à créer une convexion forcée d'air au contact du radiateur, les projecteurs avant, les clignotants avant, le klaxon, un ou plusieurs capteurs d'aide au stationnement, des feux anti-brouillard, des éléments du circuit de ventilation et de climatisation de l'habitacle du véhicule, des capteurs de commande des différents coussins gonflables du véhicule, des absorbeurs de chocs.

L'ensemble de ces éléments est généralement monté sur la structure rigide de la face avant dans l'atelier du fournisseur de la face avant, puis celle-ci, avec les équipements prémontés, est rapportée sur les longerons principaux du véhicule dans l'usine d'assemblage du constructeur du véhicule automobile.

La structure rigide 6 comporte une traverse 8 transversale, une poutre rigide 10 transversale, une demi-cassette supérieure 12 de blocage du radiateur 7, une demi-cassette inférieure 14 de support du radiateur 7, et deux bras 16 de support des boîtiers de projecteurs.

La traverse 8 est une pièce venue de moulage en matière plastique. Elle s'étend transversalement sensiblement sur toute la largeur du véhicule. Suivant la direction verticale, elle est située sensiblement au niveau des extrémités avant 2 des longerons principaux. Ainsi, elle présente des parties d'extrémité opposées 18 disposées longitudinalement dans le prolongement des extrémités avant 2 des longerons principaux.

Considérée dans un plan perpendiculaire à la direction transversale, la traverse 8 présente une section en U, ouverte vers l'arrière. Vers l'avant du véhicule, elle présente une face frontale 20 fermée. Vers le haut et vers le bas, elle est délimitée par des faces fermées supérieure et inférieure 22 et 24. Elle est par exemple renforcée par des entretoises venues de moulage, disposées dans l'espace interne de la traverse en U, et reliant entre elles les trois faces 20, 22, 24 de la traverse.

La face avant 1 comporte également différents absorbeurs, prévus pour amortir des chocs entre le véhicule sur lequel est montée ladite face avant et un autre véhicule. La face avant comporte notamment des absorbeurs prévus pour amortir des chocs sur un autre véhicule à vitesse moyenne, c'est-à-dire à une vitesse relative d'environ 16 km/h. Ces chocs sont dits "réparabilité". Les absorbeurs 26 sont visibles sur la figure 1. De tels absorbeurs comportent typiquement un bloc en un matériau alvéolaire 28 et une enveloppe 30 dans laquelle est engagé le bloc 28. Le bloc 28 est par exemple réalisé en mousse d'aluminium, ou est constitué d'une structure en nids d'abeille réalisée en aluminium ou en alliage d'aluminium. De manière à obtenir un bon comportement de l'absorbeur en cas de chocs, ces blocs doivent être disposés dans une enveloppe délimitant un logement de forme sensiblement conjuguée à celle du bloc. La déformation de l'enveloppe sous l'effet du choc permet de contrôler le comportement du bloc.

Comme le montre la figure 1, chaque enveloppe 30 est constituée par une partie d'extrémité 18 de la traverse. Ces parties d'extrémité comportent chacune une pluralité de parois définissant le logement de réception d'un bloc 28.

On voit par ailleurs sur la figure 1 que les blocs 28 sont interposés longitudinalement entre les extrémités avant 2 des longerons et les parties d'extrémité 18 de la traverse.

La poutre 10 joue le rôle de poutre de pare-chocs. Elle constitue ainsi l'élément de structure du pare-chocs du véhicule automobile. Elle a également une fonction de cohésion entre les parties avant 2 des longerons principaux du véhicule.

La poutre 10 présente typiquement la forme d'une platine, c'est-à-dire d'une plaque métallique. Elle est par exemple obtenue par emboutissage. Elle comporte une zone centrale 32 s'étendant dans un plan sensiblement vertical et transversal, et un bord 34 dressé vers l'arrière du véhicule par rapport à la zone centrale. Le bord 34 s'étend le long de toute la périphérie de la zone centrale 32. La poutre 10 est rigidement fixée sur les parties avant 2 des longerons par deux extrémités transversales opposées 37. Elle est fixée aux longerons par tous moyens adaptés, par exemple par des points de soudure. Les extrémités 37 de la poutre 10 sont interposées longitudinalement entre les absorbeurs de chocs 26 et les extrémités avant 2 des longerons principaux.

Les absorbeurs de chocs 26 comportent chacun une platine 38 de fixation de l'absorbeur de chocs sur la poutre 10. La platine 38 est rigidement fixée au bloc 28, par exemple par soudage, ou est venue de matière avec ce bloc. La platine 38 est fixée sur l'extrémité 37 correspondante par l'intermédiaire de boulons de fixation, comme décrit plus loin.

Les bras 16 de support des boîtiers de projecteurs sont du type décrits dans la demande de brevet EP-1 232 932. Ils sont situés, suivant la direction verticale, à distance au-dessus de la traverse 8. Ils sont typiquement venus de moulage avec la traverse 8.

Comme le montre la figure 1, les bras 16 présentent une forme allongée, et s'étendent à partir d'une extrémité intérieure 40, vers l'arrière et vers l'extérieur du véhicule, jusqu'à une extrémité extérieure 42. Chaque bras 16 est lié à la traverse 8 par l'intermédiaire d'une jambe 44, elle aussi venue de matière avec la traverse 8.

Par ailleurs, la face avant comporte des moyens 46 de liaison de l'extrémité extérieure 42 du bras 16 à l'un des longerons supérieurs du véhicule. Les moyens 46 comportent typiquement des moyens d'indexage du bras 16 par rapport à l'aile du véhicule, et des moyens de fixation positive de ce bras sur le longeron supérieur correspondant. Les moyens d'indexage peuvent comporter par exemple un doigt. Les moyens de fixation positive peuvent par exemple comprendre un ou plusieurs boulons.

Les moyens 46 assurent une fixation rigide du bras 16 sur ledit longeron supérieur.

La demi-cassette supérieure 12 est disposée au-dessus de la traverse 8. Elle présente la forme générale d'un arceau ouvert vers le bas, c'est-à-dire vers la traverse 8. Elle est venue de moulage en une matière plastique. Elle comporte une partie centrale transversale 48 et deux jambes 50 s'étendant perpendiculairement à la partie centrale 48 à partir des deux extrémités opposées de celle-ci. Les jambes 50 sont rigidement fixées à la traverse 8 par des moyens de fixation frangibles 52.

La traverse 8 porte sur ses deux parties d'extrémité 18 des cornières 54. Chaque cornière 54 présente une aile 56 sensiblement verticale et transversale solidaire de la traverse 8, et une aile 58 sensiblement horizontale s'étendant vers l'arrière à partir de l'aile verticale 56. Les cornières 54 sont venues de moulage avec la traverse 8. L'aile verticale 56 porte deux orifices 60. Les orifices 60 sont placés en regard d'orifices 61 et 62 correspondants ménagés respectivement dans la platine 38 et dans l'extrémité 37 de la poutre correspondant à la cornière 54. Des boulons sont engagés à travers les orifices 60, 61, 62 placés en correspondance, de telle sorte que la poutre 10, la platine 38 et l'extrémité 37 de la traverse sont pressées les unes contre les autres et solidarisés les unes aux autres.

Les moyens de fixation frangibles 52 comportent des semelles 63 solidaires des extrémités libres des jambes 50 et appliquées au-dessus des ailes horizontales 58 des cornières. Les semelles 63 et les ailes 58 présentent des orifices 64 et 66 disposées en correspondance. Des boulons de fixation de la demi-cassette supérieure à la traverse sont engagés dans les orifices 64 et 66. Les jambes 50 s'étendent sensiblement perpendiculairement aux semelles 63. Les jambes 50 sont liées aux semelles 63 par une pluralité de voiles 68 en matière plastique. Des évidements (non représentés) sont ménagés dans la semelle 63 à la base des voiles 68. Les semelles 63, les voiles 68 et les évidements constituent les moyens de liaison frangibles 52. Comme détaillé plus bas, les moyens 52 permettent à la demi-cassette supérieure d'être escamotable en cas de choc piéton de type hanche, conformément aux principes des demandes FR 06 04571 et FR 06 04577 déposées par le déposant.

La demi-cassette inférieure 14 est disposée en dessous de la traverse 8. Elle présente une forme en arceau similaire à celle de la demi-cassette supérieure. L'arceau est ouvert vers le haut, c'est-à-dire vers la traverse 8. La demi-cassette inférieure n'a aucune liaison directe avec la demi-cassette supérieure. La demi-cassette inférieure 14 est typiquement venue de moulage avec la traverse 18. Les moyens de liaison entre la demi-cassette inférieure 14 et la traverse 8 ne sont pas frangibles en cas de chocs piéton. La demi-cassette inférieure 14 comporte deux oeillets 69 de support et de blocage de la partie inférieure du radiateur. Les oeillets 69 font saillie vers l'arrière du véhicule par rapport à la partie centrale transversale 70 de la demi-cassette inférieure.

La face avant 1 comporte un absorbeur 72 adapté pour amortir les chocs piétons de type jambes. L'absorbeur 72 est une barre en une mousse de matériau plastique rigidement fixée sur la face frontale 20 de la traverse 8. L'absorbeur 72 s'étend sur la plus grande partie de la longueur transversale de la traverse 8, sensiblement d'un longeron principal à un autre.

La face avant comprend un autre absorbeur 74 prévu pour amortir les chocs piétons de type jambes, rigidement fixé à la partie centrale 70 de la demi-cassette inférieure. Cet absorbeur, dit "voie basse", présente la forme d'un plateau sensiblement horizontal, réalisé en une mousse de matériau plastique. Il s'étend vers l'avant à partir de la partie centrale 70 de la demi-cassette inférieure.

La face avant comporte encore une serrure 76 de verrouillage du capot du véhicule automobile. Cette serrure 76 est rigidement fixée sur la face supérieure 22 de la traverse, transversalement sensiblement à mi-distance entre les deux longerons 4, c'est-à-dire au centre de la traverse 8.

Chacune des platines 38 de fixation des absorbeurs sur la poutre 10 comporte un prolongement 78 faisant office de raidisseur d'une jambe verticale 80 de la demi-cassette inférieure. Les raidisseurs 78 s'étendent vers le bas à partir de la platine 38 et sont venus de matière avec celle-ci. Ils sont plaqués contre les jambes 80, à l'arrière de celles-ci.

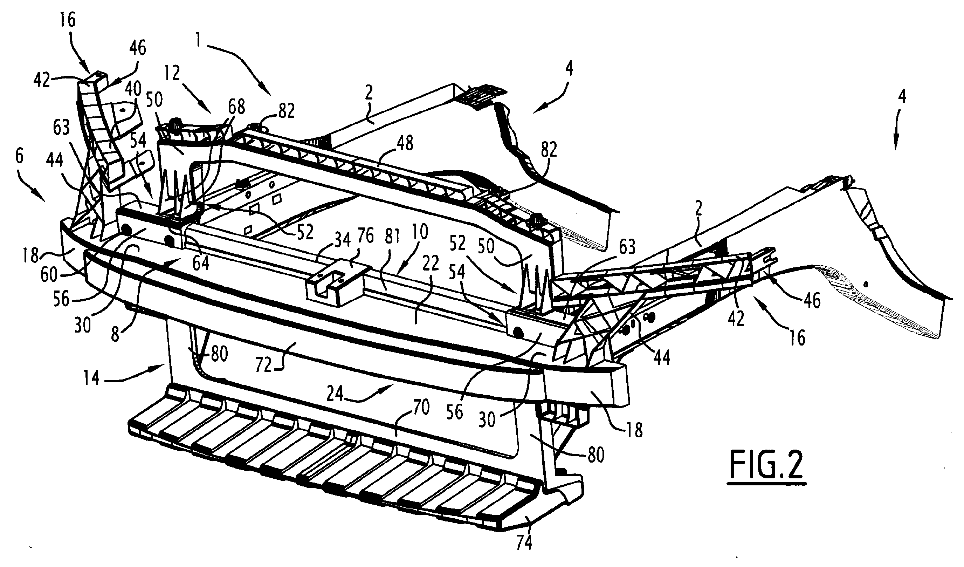

A l'état assemblé de la face avant, illustré sur la figure 2, les blocs de matière alvéolaire 28 sont engagés à l'intérieur de la traverse 8, la platine 38 venant en appui contre les ailes verticale 56 des cornières. La platine 38 est prise en sandwich entre l'aile 56 et l'extrémité 37 de la poutre. La poutre 10 est appliquée contre la face arrière ouverte de la traverse 8 et obture celle-ci. Les demi-cassettes inférieure et supérieure 14 et 12 sont disposées sensiblement dans un même plan transversale et vertical, au-dessous et au-dessus de la traverse 8.

Comme le montre la figure 2, le bord transversal supérieur 81 de la poutre fait saillie au-dessus de la face supérieure 22 de la traverse. La serrure 76 est en appui sur ledit bord 81.

Le radiateur 8 repose sur les oeillets 69 de la demi-cassette inférieure. Il comporte des pions faisant saillie vers le bas, ces pions étant engagés dans les oeillets 69. Les pions coopèrent avec les oeillets 69 en vue de bloquer la partie inférieure du radiateur en translation dans un plan horizontal.

Par ailleurs, la demi-cassette supérieure comporte des orifices traversants 82 d'axes verticaux. Des broches sont engagées à travers les orifices 82. Leurs extrémités sont engagées dans des logements de réception ménagés sur la partie supérieure du radiateur. Les broches sont bloquées en position par rapport à la demi-cassette supérieure par des clavettes démontables. Les moyens de blocage du radiateur par rapport aux demi-cassettes supérieure et inférieure sont connus en soit et ne seront pas décrits plus en détail ici.

Les boîtiers des projecteurs reposent par leur partie inférieure sur les bras 16 et sont rigidement fixés à ces bras 16. Par ailleurs, la face avant comporte des moyens non représentés de fixation des parties supérieures des boîtiers de projecteurs sur les ailes du véhicule.

En cas de choc piéton, il peut se produire que la hanche ou la tête du piéton vienne percuter le capot du véhicule sensiblement au niveau de la demi-cassette supérieure 12. Si l'énergie transmise par le choc à la demi-cassette supérieure dépasse une limite prédéterminée, les moyens de liaison 52 se rompent et la demi-cassette 12 bascule vers l'arrière et vers le bas autour d'un axe transversal X1 passant sensiblement par les semelles 63. Comme le montre la figure 3, le basculement de la demi-cassette supérieure entraîne le basculement du radiateur 7 autour d'un axe transversal X2 passant sensiblement par les oeillets 69. La demi-cassette inférieure 14 quant à elle ne subit aucun déplacement. Le pivotement du radiateur par rapport à la demi-cassette inférieure est rendue possible par le fait que la partie inférieure du radiateur est bloquée simplement par engagement de pions du radiateur dans les oeillets 69 de la demi-cassette inférieure. De même, il se produit un pivotement relatif du radiateur 7 par rapport à la demi-cassette supérieure 12, qui est rendu possible par le fait que la demi-cassette supérieure est liée au radiateur par des broches qui sont simplement engagées dans des logements ménagés sur le radiateur.

La face avant décrite ci-dessus présente de multiples avantages.

Du fait que la traverse est positionnée verticalement sensiblement au niveau des extrémités avant des longerons principaux, il est possible de conférer à la face avant une architecture complètement nouvelle, permettant de respecter les différentes exigences de la législation et les contraintes imposées par les constructeurs de véhicules automobiles. En particulier, la face avant ne comporte plus de traverse supérieure passant au-dessus des boîtiers des projecteurs en vue d'assurer la liaison avec les longerons supérieurs du véhicule. De ce fait, l'accès aux boîtiers des projecteurs en vue de changer les ampoules est considérablement facilité.

La traverse ne réduit pas le flux d'air destiné au refroidissement du radiateur, du fait qu'elle est intégrée à la zone d'absorption des chocs occupée dans l'état de la technique par la poutre de pare-chocs.

La demi-cassette supérieure n'est pas une pièce de structure, du fait que ni cohésion entre les longerons principaux ni la cohésion entre les longerons supérieurs et les longerons principaux, n'est réalisée à travers cette demi-cassette supérieure. De ce fait, la demi-cassette supérieure peut être réalisée dans un matériau moins rigide et mieux adapté au respect des exigences d'amortissement du choc piéton hanches et tête.

En revanche, la demi-cassette inférieure doit être rigidifiée, de manière à supporter le radiateur, et éventuellement d'autres éléments de refroidissement, et l'absorbeur bas.

Les éléments de la face avant qui varient d'un véhicule à un autre au sein de la même plateforme constructeur sont rassemblés sur la traverse. Ces éléments sont essentiellement la position des supports de projecteurs, la localisation de la serrure et la localisation des points de liaison aux longerons d'aile supérieurs.

La face avant décrite ci-dessus peut présenter de multiples variantes.

La traverse 8 peut ne pas être une pièce en matière plastique venue de moulage, mais comporter un insert métallique et une matière plastique surmoulée sur l'insert. En variante, la poutre 10 peut constituer l'insert métallique. Dans ce cas, la poutre 10 est placée à l'avant des absorbeurs de chocs moyenne vitesse, ceux-ci étant fixés directement aux extrémités avant des longerons principaux.

La partie de la traverse formant enveloppe de réception du bloc en matériau alvéolaire pour les absorbeurs de chocs moyenne vitesse peut être renforcée par un insert métallique.

Les bras de support des boîtiers de projecteurs peuvent ne pas être venus de matière avec la traverse mais être des pièces rapportées sur la traverse 8.

La demi-cassette inférieure 14 peut ne pas être venue de matière avec la traverse 8, mais, comme la demi-cassette supérieure, être rapportée sur la traverse.

L'absorbeur de chocs solidaire de la demi-cassette inférieure peut être venu de moulage avec ladite demi-cassette inférieure. Cet absorbeur peut également faire office d'absorbeur pour amortir les chocs dits compatibilité entre véhicules, c'est-à-dire les chocs à petite vitesse entre 2,5 km/h et 4 km/h.

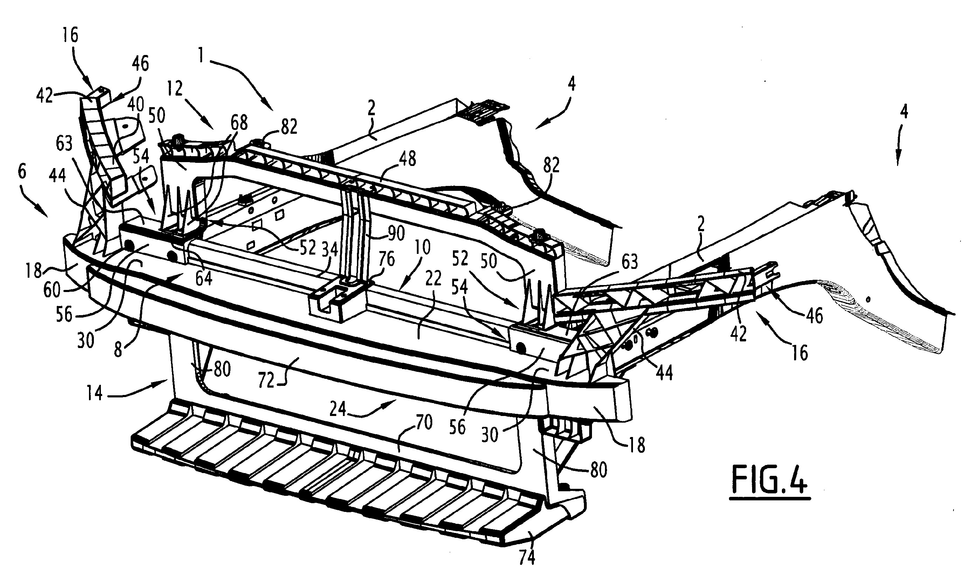

Comme le montre la figure 4, la serrure 76 n'est pas nécessairement disposée au niveau de la face supérieure 22 de la traverse. Pour des raisons de style, la serrure 76 peut être disposée à distance au-dessus de la traverse 18, et être rendue solidaire de ladite traverse 8 par une entretoise 90. L'entretoise 90 peut être une pièce métallique rigide. L'entretoise 90 peut également être une pièce en matière plastique et peut, en variante, comporter des moyens d'affaiblissement, de telle sorte que, en cas de chocs sur le capot au niveau de la serrure 76, l'entretoise 90 puisse s'escamoter, de manière à ne pas blesser le piéton.

La face avant peut comprendre non pas une serrure de verrouillage du capot, mais deux ou plus de deux serrures, les serrures étant réparties le long de la traverse et étant toutes solidaires de la traverse.

## Revendications

1. Face avant de véhicule automobile, la face avant (1) étant susceptible d'être rigidement fixée à des extrémités avant (2) des longerons principaux (4) du véhicule automobile, la face avant (1) comprenant :
- au moins une traverse (8), située verticalement sensiblement au niveau desdites extrémités avant (2) des longerons principaux (4), et au moins une serrure (76) de verrouillage du capot du véhicule automobile, la ou chaque serrure (76) étant rigidement fixée à la traverse (8),
**caractérisée en ce que** la face avant comprend
- un radiateur (7), une demi-cassette supérieure (12) de blocage en position du radiateur (7) disposée au dessus de la traverse (8), et des moyens (52) pour fixer rigidement la demi-cassette supérieure (12) à la traverse (8) ;
et **en ce qu'**elle comprend une demi-cassette inférieure (14) de support du radiateur disposée au dessous de la traverse (8) et indépendante de la demi-cassette supérieure (12), la demi-cassette inférieure (14) étant solidaire de la traverse (8).

2. Face avant selon la revendication 1, **caractérisée en ce qu'**elle comprend au moins deux projecteurs, la traverse (8) étant située verticalement à un niveau inférieur à celui des projecteurs:

3. Face avant selon la revendication 1 ou 2, **caractérisée en ce qu'**elle comprend au moins deux absorbeurs (26) adaptés pour amortir les chocs dits « moyenne vitesse », ces absorbeurs de chocs "moyenne vitesse" (26) étant interposés entre des parties d'extrémités (18) opposées de la traverse (8) et les extrémités avant (2) des longerons principaux (4).

4. Face avant selon la revendication 3, **caractérisée en ce que** les absorbeurs de chocs "moyenne vitesse" (26) comprennent un bloc (28) en matériau alvéolaire et une enveloppe (30) dans laquelle est engagé le bloc en matériau alvéolaire (28), les enveloppes (30) étant constituées par les parties d'extrémité (18) de la traverse (8).

5. Face avant selon l'une quelconque des revendications 3 à 4, **caractérisée en ce que** la traverse (8) est une pièce en matière plastique venue de moulage.

6. Face avant selon l'une quelconque des revendications 3 à 5, **caractérisée en ce qu'**elle comprend une poutre rigide (10) métallique transversale, ladite poutre (10) présentant des extrémités transversales (37) interposées entre les absorbeurs de chocs ""moyenne vitesse" (26) et les extrémités avant (2) des longerons principaux (4).

7. Face avant selon l'une quelconque des revendications 3 à 4, **caractérisée en ce que** la traverse (8) est une pièce hybride comprenant un insert métallique rigide et une matière plastique surmoulée sur l'insert métallique.

8. Face avant selon l'une quelconque des revendications 1 à 7, **caractérisée en ce qu'**elle comprend deux boîtiers de projecteurs et deux bras (16) de support des boîtiers de projecteurs, lesdits bras de support (16) étant solidaires de la traverse (8).

9. Face avant selon la revendication 8, **caractérisée en ce que** les bras de support (16) sont venus de moulage avec la traverse (8).

10. Face avant selon la revendication 8, **caractérisée en ce que** les bras de support (16) sont rapportés sur la traverse (8).

11. Face avant selon l'une quelconque des revendications 8 à 10, **caractérisée en ce qu'**elle comprend des moyens (46) de fixation des bras de support (16) à des longerons supérieurs du véhicule.

12. Face avant selon l'une quelconque des revendications 8 à 11, **caractérisée en ce que** les boîtiers de projecteurs sont rigidement fixés aux bras de support (16) par des zones inférieures, la face avant (1) comportant des moyens de fixation de zones supérieures des boîtiers de projecteurs aux ailes du véhicule.

13. Face avant selon l'une quelconque des revendications 1 à 12, **caractérisée en ce qu'**elle comprend un absorbeur (72) adapté pour amortir les chocs piétons de type jambes rigidement fixé le long d'une face frontale (20) de la traverse (8).

14. Face avant selon l'une quelconque des revendications précédentes, **caractérisée en ce que** les moyens (52) pour fixer rigidement la demi-cassette supérieure (12) à la traverse (8) sont adaptés pour être frangibles en cas de chocs piéton de type hanche à l'avant du véhiculé.

15. Face avant selon l'une quelconque des revendications précédentes, **caractérisée en ce qu'**elle comprend des moyens (69) pour bloquer rigidement le radiateur (7) par rapport à la demi-cassette inférieure (14) adaptés pour permettre un basculement du radiateur (7) avec la demi-cassette supérieure (12) en cas de chocs piéton de type hanche à l'avant du véhicule.

16. Face avant selon l'une quelconque des revendications précédentes, **caractérisée en ce qu'**elle comprend un absorbeur voie basse (74) adapté pour amortir les chocs piétons de type jambe, rigidement fixé à la demi-cassette inférieure (14), à distance au-dessous de la traverse (8).

17. Face avant selon l'une quelconque des revendications 1 à 16, **caractérisée en ce que** la ou chaque serrure (76) est disposée verticalement à distance au-dessus de la traverse (8) et est rigidement fixée à la traverse (8) par une entretoise rigide (90).

## Patentansprüche

1. Vorderfront eines Kraftfahrzeugs, wobei die Vorderfront (1) geeignet ist, starr an vorderen Enden (2) der Hauptlängsträger (4) des Kraftfahrzeugs befestigt zu werden, wobei die Vorderfront (1) umfasst:
- mindestens eine Traverse (8), die vertikal im Wesentlichen an den vorderen Enden (2) der Hauptlängsträger (4) angeordnet ist, und
- mindestens ein Schloss (76) zur Verriegelung der Haube des Kraftfahrzeugs, wobei das oder jedes Schloss (76) starr an der Traverse (8) befestigt ist,
**dadurch gekennzeichnet, dass** die Vorderfront umfasst:
- einen Kühler (7), eine obere Halbkassette (12) zur Positionsblockierung des Kühlers (7), die über der Traverse (8) angeordnet ist, und Mittel (52) zum starren Befestigen der oberen Halbkassette (12) an der Traverse (8); und dass sie eine untere Halbkassette (14) zum Abstützen des Kühlers umfasst, die unterhalb der Traverse (8) und unabhängig von der oberen Halbkassette (12) angeordnet ist, wobei die untere Halbkassette (14) mit der Traverse (8) verbunden ist.

2. Vorderfront nach Anspruch 1, **dadurch gekennzeichnet, dass** sie mindestens zwei Scheinwerfer umfasst, wobei die Traverse (8) vertikal auf einem Niveau angeordnet ist, das unter dem der Scheinwerfer ist.

3. Vorderfront nach Anspruch 1 oder 2, **dadurch gekennzeichnet, dass** sie mindestens zwei Stoßdämpfer (26) umfasst, die angepasst sind, Stöße so genannter "mittlerer Geschwindigkeit" zu dämpfen, wobei diese Stoßdämpfer (26) "mittlerer Geschwindigkeit" zwischen den entgegengesetzten Endbereichen (18) der Traverse (8), und den vorderen Enden (2) der Hauptlängsträger (4) angeordnet sind.

4. Vorderfront nach Anspruch 3, **dadurch gekennzeichnet, dass** die Stoßdämpfer (26) "mittlerer Geschwindigkeit" einen Block (28) aus Schaumstoff und eine Umhüllung (30) umfassen, in die der Block (28) aus Schaumstoff eingreift, wobei die Umhüllungen (30) von den Endbereichen (18) der Traverse (8) gebildet werden.

5. Vorderfront nach einem beliebigen der Ansprüche 3 bis 4, **dadurch gekennzeichnet, dass** die Traverse (8) aus einem Teil aus Kunststoff besteht und durch Formen hergestellt ist.

6. Vorderfront nach einem beliebigen der Ansprüche 3 bis 5, **dadurch gekennzeichnet, dass** sie einen starren metallischen Querbalken (10) umfasst, wobei der Balken (10) Querenden (37) aufweist, die zwischen den Stoßdämpfern (26) "mittlerer Geschwindigkeit" und den vorderen Enden (2) der Hauptlängsträger (4) angeordnet sind.

7. Vorderfront nach einem beliebigen der Ansprüche 3 bis 4, **dadurch gekennzeichnet, dass** die Traverse (8) ein Hybridteil ist, das eine starre metallische Einlage und einen Kunststoff umfasst, der über die metallische Einlage geformt ist.

8. Vorderfront nach einem beliebigen der Ansprüche 1 bis 7, **dadurch gekennzeichnet, dass** sie zwei Scheinwerferkästen und zwei Arme (16) zum Abstützen der Scheinwerferkästen umfasst, wobei die Abstützarme (16) mit der Traverse (8) verbunden sind.

9. Vorderfront nach Anspruch 8, **dadurch gekennzeichnet, dass** die Abstützarme (16) durch Formen mit der Traverse (8) hergestellt sind.

10. Vorderfront nach Anspruch 8, **dadurch gekennzeichnet, dass** die Abstützarme (16) an der Traverse (8) befestigt sind.

11. Vorderfront nach einem beliebigen der Ansprüche 8 bis 10, **dadurch gekennzeichnet, dass** sie Mittel (46) zur Befestigung der Abstützarme (16) an oberen Längsträgern des Fahrzeugs umfasst.

12. Vorderfront nach einem beliebigen der Ansprüche 8 bis 11, **dadurch gekennzeichnet, dass** die Scheinwerferkästen mittels unterer Zonen starr an den Abstützarmen (16) befestigt sind, wobei die Vorderfront (1) Mittel zur Befestigung von oberen Zonen der Scheinwerferkästen an den Kotflügeln des Fahrzeugs umfasst.

13. Vorderfront nach einem beliebigen der Ansprüche 1 bis 12, **dadurch gekennzeichnet, dass** sie einen Dämpfer (72) umfasst, der angepasst ist, Bein-Fußgängerstöße zu dämpfen, und der starr längs einer Frontseite (20) der Traverse (8) befestigt ist.

14. Vorderfront nach einem der vorhergehenden Ansprüche, **dadurch gekennzeichnet, dass** die Mittel (52) zur starren Befestigung der oberen Halbkassette (12) an der Traverse (8) angepasst sind, im Falle von Hüft-Fußgängerstößen vorn am Fahrzeug zerbrochen zu werden.

15. Vorderfront nach einem beliebigen der vorhergehenden Ansprüche, **dadurch gekennzeichnet, dass** sie Mittel (69) zur starren Blockierung des Kühlers (7) in Bezug auf die untere Halbkassette (14) umfasst, die angepasst sind, ein Schwenken des Kühlers (7) mit der oberen Halbkassette (12) im Fall von Hüft-Fußgängerstößen vorn am Fahrzeugs zu ermöglichen.

16. Vorderfront nach einem beliebigen der vorhergehenden Ansprüche, **dadurch gekennzeichnet, dass** sie einen Niedrigweg-Dämpfer (74) umfasst, der angepasst ist, Bein-Fußgängerstöße zu dämpfen, und der starr an der unteren Halbkassette (14) mit Abstand unter der Traverse (8) angeordnet ist.

17. Vorderfront nach einem beliebigen der Ansprüche 1 bis 16, **dadurch gekennzeichnet, dass** das oder jedes Schloss (76) vertikal mit Abstand über der Traverse (8) angeordnet ist und über einen starren Abstandshalter (90) starr an der Traverse (8) befestigt ist.

## Claims

1. Motor vehicle front face, the front face (1) being capable of being fixed rigidly to front ends (2) of the main longitudinal members (4) of the motor vehicle, the front face (1) comprising:
- at least one cross member (8), vertically located substantially level with said front ends (2) of the main longitudinal members (4); and
- at least one lock (76) for fastening the bonnet of the motor vehicle, the or each lock (76) being rigidly fixed to the cross member (8),
**characterised in that** the front face comprises a radiator (7), an upper cassette half (12), located above the cross member (8), for fixing the radiator (7) in position and means (52) for fixing the upper cassette half (12) rigidly to the cross member (8), and **in that** the front face comprises a lower cassette half (14), located below the cross member (8) and independent of the upper cassette half (12), for supporting the radiator (7), the lower cassette half (14) being integral with the cross member (8).

2. Front face according to claim 1, **characterised in that** it comprises at least two headlights, the cross member (8) being vertically located at a level lower than that of the headlights.

3. Front face according to either claim 1 or claim 2, **characterised in that** it comprises at least two absorbers (26) suitable for absorbing so-called medium-speed impacts, these medium-speed impact absorbers (26) being inserted between opposite end portions (18) of the cross member (8) and the front ends (2) of the main longitudinal members (4).

4. Front face according to claim 3, **characterised in that** the medium-speed impact absorbers (26) comprise a block (28) made of a cellular material and a casing (30) in which the block of cellular material (28) engages, the casings (30) being formed by the end portions (18) of the cross member (8).

5. Front face according to any one of claims 3 to 4, **characterised in that** the cross member (8) is an integrally moulded component made of a plastics material.

6. Front face according to any one of claims 3 to 5, **characterised in that** it comprises a rigid metal cross beam (10), said beam (10) having transverse ends (37) inserted between the medium-speed impact absorbers (26) and the front ends (2) of the main longitudinal members (4).

7. Front face according to any one of claims 3 to 4, **characterised in that** the cross member (8) is a hybrid component comprising a rigid metal insert and a plastics material overmoulded onto the metal insert.

8. Front face according to any one of claims 1 to 7, **characterised in that** it comprises two headlight housings and two arms (16) to support the headlight housings, said support arms (16) being integral with the cross member (8).

9. Front face according to claim 8, **characterised in that** the support arms (16) are integrally moulded with the cross member (8).

10. Front face according to claim 8, **characterised in that** the support arms (16) are attached to the cross member (8).

11. Front face according to any one of claims 8 to 10, **characterised in that** it comprises means (46) for mounting the support arms (16) on upper longitudinal members of the vehicle.

12. Front face according to any one of claims 8 to 11, **characterised in that** the headlight housings are rigidly mounted on the support arms (16) by lower regions, the front face (1) comprising means for mounting upper regions of the headlight housings to the wings of the vehicle.

13. Front face according to any one of claims 1 to 12, **characterised in that** it comprises an absorber (72) provided to absorb leg-type pedestrian impacts, fixed rigidly along a frontal face (20) of the cross member (8).

14. Front face according to any one of the preceding claims, **characterised in that** the means (52) for rigidly fixing the upper cassette half (12) to the cross member (8) are provided so as to be frangible in hip-type pedestrian collisions on the front of the vehicle.

15. Front face according to any one of the preceding claims, **characterised in that** it comprises means (69), for rigidly fixing the radiator (7) relative to the lower cassette half (14), suitable for allowing the radiator (7) to pivot together with the upper cassette half (12) in hip-type pedestrian collisions on the front of the vehicle.

16. Front face according to any one of the preceding claims, **characterised in that** it comprises a low channel absorber (74) for absorbing leg-type pedestrian impacts, rigidly fixed to the lower cassette half (14), at a distance below the cross member (8).

17. Front face according to any one of the preceding claims, **characterised in that** the or each lock (76) is vertically located at a distance above the cross member (8) and is rigidly fixed to the cross member (8) by a rigid strut (90).
